# EUROPÄISCHE PATENTSCHRIFT

(11) **EP 3 949 050 B1**
(45) Veröffentlichungstag und Bekanntmachung des Hinweises auf die Patenterteilung: **02.12.2026**
(21) Anmeldenummer: 20716418.7
(22) Anmeldetag: 30.03.2020
(51) Int. Cl.: H02G 3/32, F16L 3/237

(54) **BEFESTIGUNGSTEIL**
FASTENING PART
PIÈCE DE FIXATION

(30) Priorität: 01.04.2019 DE 202019101830 U
(43) Veröffentlichungstag der Anmeldung: 09.02.2022
(73) Patentinhaber: igus SE & Co. KG, 51147 Köln (DE)
(72) Erfinder: STEEGER, Ralf, 53797 Lohmar (DE); OTTERSBACH, Jörg, 53332 Bornheim (DE)
(74) Vertreter: Lippert Stachow Patentanwälte Rechtsanwälte
(86) Internationale Anmeldenummer: PCT/EP2020/058896
(87) Internationale Veröffentlichungsnummer: WO 2020/201181

(56) Entgegenhaltungen:
- EP-A1- 2 251 553
- WO-A1-2017/220976
- DE-A1- 102017 117 087
- JP-A- 2012 163 199
- US-B1- 7 997 546

## Beschreibung

Die Erfindung betrifft ein Befestigungsteil zur Befestigung einer Energieführung an einem Bauteil, das einen Fußsteg aufweist, der, sich in einer Längsrichtung erstreckend, in einer vorgekrümmten, geraden oder winkligen Ausführung gestaltet und auf einem Bauteil sich in dessen Umfangsrichtung erstreckend anordenbar ist und der in seinen Endbereichen Haltemittel für ein strang- oder bandförmiges erstes Befestigungselement zur Befestigung des Befestigungsteils am Bauteil aufweist, und das Befestigungsteil einen sich in Längsrichtung des Fußstegs erstreckenden Befestigungssteg aufweist, der mehrere Befestigungsmittel zur Befestigung eines zweiten Befestigungselements unterschiedlicher Ausgestaltung zur Befestigung einer Energieführung am Befestigungsteil aufweist, wobei der Fußsteg und der Befestigungssteg in ihrem mittleren Bereich über ein Verbindungselement miteinander verbunden sind, so dass sich über das Verbindungselement hinaus in Längsrichtung des Fußstegs erstreckende Seitenbereiche des Befestigungsstegs in einem Abstand zum Fußsteg angeordnet sind, wobei der mittlere Bereich des Befestigungsstegs, an den das Verbindungselement angeformt ist, zweite Befestigungsmittel der mehreren Befestigungsmittel aufweist, die in Querrichtung bezüglich der Längsrichtung des Befestigungsstegs beabstandet angeordnete Öffnungen aufweisen, der Befestigungssteg sich in einer zur Längsrichtung des Fußstegs parallelen Längsrichtung erstreckt, das Befestigungsteil als Doppel-T-förmiges und als Kunststoff-Spritzgussteil gefertigtes einstückiges Teil ausgebildet ist, wobei ein T-Steg den Befestigungssteg und der andere T-Steg den Fußsteg bildet, und der Fußsteg als biegeelastischer Steg ausgebildet ist.

Insbesondere soll das Befestigungsteil zur Befestigung schlauchartiger Energieführungen und rohrförmiger Energieführungsketten an einem Bauteil dienen.

Die Bauteile können einen beliebigen Querschnitt, **z. B.** einen kreisförmigen, quadratischen oder rechteckigen Querschnitt aufweisen. Als Bauteile kommen insbesondere Roboterarme in Betracht, **z. B.** Arme von kollaborativen Robotern (Cobots) aber auch **z. B.** Schreibtischbeine, Regalstützen oder fachwerkartige Stahlkonstruktionen, **z. B.** zur Befestigung einer zu Lampen oder anderen Energieverbrauchern führenden Energieführungen.

Es ist bekannt, zur Befestigung einer Energieführung an einem Bauteil eine Halterung **z. B.** in Form einer Schelle, eines Klettbandes oder eines Kabelbinders, sowie eine Halterung für die Energieführung, **z. B.** ebenfalls in Form einer Schelle, eines Klettbandes oder Kabelbinders, zu verwenden, wobei beide Halterungen aneinander starr oder relativ zueinander drehbar befestigt sind. In der Regel sind derartige Befestigungen in ihrer Konstruktion und Handhabung bei der Anbringung am oder dem Entfernen von der Energieführung und vom Bauteil relativ aufwändig.

Ein Befestigungsteil der eingangs genannten gattungsgemäßen Art ist aus der JP2012163199A bekannt. Der an das Verbindungselement einstückig angeformte Befestigungssteg weist an seinen sich über das Verbindungselement hinaus in Längsrichtung des Fußstegs erstreckenden Seitenbereichen einstückig angeformte Befestigungselemente zur Befestigung eines rohrförmigen Körpers auf. Diese bilden im Sinne des eingangs genannten gattungsgemäßen Befestigungsteils zweite Befestigungselemente, die zur Befestigung des Befestigungsteils an einem Bauteil ausgelegt sind. Der Befestigungssteg weist etwa in seinem mittleren Bereich, an dem das Verbindungselement angeformt ist, Befestigungsmittel in Form von Eingriffsöffnungen zur Durchführung eines um den rohrförmigen Körper gelegten und diesen haltenden bandförmigen Körpers auf. Die Öffnungen sind in Querrichtung bezüglich der Längsrichtung des Befestigungsstegs voneinander beabstandet angeordnet. Die Öffnungen und der in ihnen durch Rastmittel fixierbare bandförmige Körper sind aneinander angepasst und nicht zur Befestigung eines zweiten Befestigungselements geeignet, das eine gegenüber dem rohrförmigen Körper unterschiedliche Ausgestaltung aufweist.

Aus der US 7,997,546 B1 ist ein Befestigungsteil zur Befestigung einer Verkehrskamera oder einer anderen Verkehrskontrolleinrichtung an einem Mast bekannt, das mit einem Fußsteg und einem mit dem Fußsteg über ein Verbindungselement verbundenen Befestigungssteg gemäß der eingangs genannten Art ausgebildet ist. Das Verbindungselement ist über Bolzen, die mit korrespondierenden Aufnahmeöffnungen im Fußsteg zusammenwirken, mit dem Fußsteg verbunden. Als Befestigungssteg kann ein am Verbindungselement angeformtes kreisrundes Teil verstanden werden, an dem über Bolzen, die mit korrespondierenden Aufnahmeöffnungen im kreisrunden Teil zusammenwirken, ein zweites Befestigungselement im Sinne des eingangs beschriebenen gattungsgemäßen Befestigungsteils verbunden ist. Jeweils eine Aufnahmeöffnung ist in sich über das Verbindungselement hinaus in Längsrichtung des Fußstegs erstreckenden Seitenbereichen des Befestigungsstegs in einem Abstand zum Fußsteg angeordnet und kann als erstes Befestigungsmittel im Sinne des eingangs genannten gattungsgemäßen Befestigungsteils angesehen werden. Weitere Aufnahmeöffnungen sind im mittleren Bereich des rohrförmigen Teils, an denen das Verbindungselement angeformt ist, in Querrichtung bezüglich der Längsrichtung des Befestigungsstegs angeordnet, wobei das Verbindungselement an seiner zum Fußsteg weisenden Seite unterhalb der Aufnahmeöffnungen angeordnete Aussparungen aufweist. Aufgrund der Konstruktion und der Befestigungsart zwischen dem Fußsteg, dem Verbindungselement und dem Befestigungssteg handelt es sich um konstruktiv aufwändige zumindest teilweise aus Metall gefertigte Teile.

Die DE 10 2017 117 087 A1 offenbart ein Befestigungsteil zur Befestigung einer Leitung an einem rohrförmigen Bauteil mit einem Fußsteg, der gemäß einer Ausführungsform, sich in einer Längsrichtung erstreckend, in einer winkligen Ausführung gestaltet ist. Der Fußsteg weist hierzu einen Mittelkörper und zwei an einander abgewandten Seiten des Mittelkörpers über Filmscharniere angeformte Außenkörper auf, die somit gegenüber dem Mittelkörper verschwenkbar sind. Der Fußsteg weist in seinen Endbereichen Haltemittel für ein bandförmiges erstes Befestigungselement zur Befestigung des Befestigungsteils am Bauteil auf. Weiterhin weist das Befestigungsteil einen sich in Längsrichtung des Fußstegs erstreckenden Befestigungssteg auf, der Befestigungsmittel zur Befestigung eines zweiten Befestigungselements zur Befestigung der Leitung am Befestigungsteil umfasst. Der Fußsteg ist in seinem mittleren Bereich über ein Verbindungselement mit dem Befestigungssteg verbunden. Der Fußsteg ist einstückig aus Kunststoff gefertigt.

Der Erfindung liegt die Aufgabe zugrunde, die Befestigung einer Energieführung an einem Bauteil konstruktiv zu vereinfachen und universeller zur Verwendung für Bauteile unterschiedlichen Durchmessers und Energieführungen unterschiedlicher Ausbildung zu gestalten. Weitere Ziele der Erfindung sind, ein kompaktes, einheitliches Design mit nahezu keinen Störkanten für ein geringeres Verletzungsrisiko, sowie eine schlanke und leichte Bauform für die Befestigung bereitzustellen. Die Montage und Nachrüstung soll in wenigen Handgriffen erfolgen.

Diese Aufgabe wird erfindungsgemäß durch die in Anspruch 1 vermittelte Lehre gelöst.

Diese Lösung lässt sich dahingehend zusammenfassen, dass zur Befestigung einer Energieführung an einem Bauteil ein Befestigungsteil der eingangs genannten Art bereitgestellt wird, wobei die Seitenbereiche jeweils erste Befestigungsmittel der mehreren Befestigungsmittel aufweisen, die in Längsrichtung des Befestigungsstegs voneinander beabstandet angeordnete Öffnungen zum Eingriff insbesondere selbstschneidender Schrauben aufweisen, so dass sie die Befestigung zweiter Befestigungselemente mit unterschiedlichen Erstreckungen längs der Seitenbereiche des Befestigungsstegs ermöglichen, dass die als Öffnungen ausgebildeten zweiten Befestigungsmittel zum Eingriff insbesondere selbstschneidender Schrauben ausgelegt sind, und das Verbindungselement an seinen quer zur Längsrichtung des Fußstegs angeordneten Seiten Aussparungen aufweist, in deren darüberliegenden Bereichen die Öffnungen der zweiten Befestigungsmittel angeordnet sind, und dass die Bereiche der freien Enden der Seitenbereiche des Befestigungsstegs Einschnürungen zur Verankerung eines um die Energieführung legbaren ringförmigen elastischen Strangs oder Bandes aufweisen und/oder in den Endbereichen des Befestigungsstegs bezüglich dessen Längsrichtung sich quer zu seiner Längsrichtung erstreckende Schlitze zur Durchführung eines um eine Energieführung gelegten als zweites Befestigungselement ausgebildeten Bandes und zu dessen Umlenkung um zwischen den Schlitzen und den diesen benachbarten freien Enden des Befestigungsstegs ausgebildete Haltestege vorgesehen sind.

Die Unteransprüche beinhalten weitere Ausgestaltungen der Erfindung.

Aufgrund seiner Biegeelastizität kann sich der Fußsteg an den Querschnitt des Bauteils im Bereich seiner Befestigung anpassen. Er ist, sich in einer Längsrichtung erstreckend, in einer vorgekrümmten, geraden oder winkligen Ausführung gestaltet, um seine Befestigung auf gekrümmten oder flächigen Bauteilen oder an einer Außenecke eines Bauteils zu vereinfachen.

Die im mittleren Bereich des Befestigungsstegs ausgebildeten Öffnungen der zweiten Befestigungsmittel können zur Befestigung eines Verschleißrings (Protektors) dienen. Der Verschleißring besteht aus zwei Ringhälften und einem Verbindungsmittel zum Verbinden der beiden Ringhälften zu einem Ring, insbesondere unter Verwendung von Schnapp- oder Rastverschlüssen. Die beiden Ringhälften werden übereinander auf dem Befestigungssteg angeordnet. Zunächst wird die untere Ringhälfte vor Einlegung der schlauchförmigen Energieführung oder rohrförmigen Energieführungskette von innen her mit vorzugsweise selbstschneidenden Schrauben am Befestigungssteg montiert. Dazu werden an die Position der Öffnungen der zweiten Befestigungsmittel angepasste Bohrungen in die untere Ringhälfte eingebracht. Nach dem Einlegen der schlauchförmigen Energieführung oder rohrförmigen Energieführungskette wird die obere Ringhälfte an der unteren Ringhälfte durch bekannte Schnapp- oder Rastverschlüsse befestigt.

Zur Montage eines als Schelle ausgebildeten zweiten Befestigungselements auf dem Befestigungssteg, wobei die Schelle eine im Wesentlichen ebene, sich weiter als die Befestigungsfläche des Verschleißrings in Längsrichtung des Befestigungselements erstreckende Befestigungsfläche aufweist, dienen die in den Befestigungssteg als erste Befestigungsmittel eingebrachten Öffnungen. Auch hier besteht die Schelle aus zwei vorzugsweise aus Kunststoff gefertigten Hälften, die übereinander angeordnet sind und vorzugsweise aus Kunststoff bestehen. Die beiden Hälften sind in einem der seitlichen Verbindungsbereiche verschwenkbar miteinander verbunden, so dass sie zum Einlegen der Energieführung aufgeschwenkt und zur Halterung der Energieführung geschlossen werden können. Als Verschluss auf der der Schwenkverbindung gegenüberliegenden Seite dient vorzugsweise ein Schnapp-, Spann- oder Rastverschluss.

Zur Montage einer solchen Schelle auf dem Befestigungssteg werden an die Positionen der Öffnungen der ersten Befestigungsmittel angepasste Bohrungen in die Bodenwand der unteren Hälfte der Schelle, bei aufgeschwenkter Position der oberen Hälfte und vor dem Einlegen der Energieführung, eingebracht. Durch die Bohrungen hindurch werden vorzugsweise selbstschneidende Schrauben hindurchgeführt und in eine oder mehrere Öffnungen der ersten Befestigungsmittel in den Seitenbereichen des Befestigungsstegs eingebracht.

Ebenso kann mit einer als Anschlusselement dienenden Schelle zum Einspannen eines Endbereichs einer Energieführung verfahren werden.

Ein erfindungsgemäßes Befestigungsteil mit einem vorstehend beschriebenen zweiten Befestigungselement zur Befestigung einer Energieführung am Befestigungsteil ist ebenfalls Gegenstand der vorliegenden Erfindung.

Die Haltemittel in den Endbereichen des Fußstegs können nach außen und zum Verbindungselement hin gewinkelte hakenförmige Vorsprünge zur Verankerung eines um das Bauteil gelegten elastischen ringförmigen Strangs oder Bandes als erstes Befestigungsmittel aufweisen.

Die hakenförmigen Vorsprünge können in einer parallel zum Fußsteg verlaufenden Ebene eine sich in einem Bogen erstreckende Anlagefläche für den um sie herumführbaren elastischen ringförmigen Strang oder das Band aufweisen, über die sich die gewinkelten Enden der hakenförmigen Vorsprünge erstrecken.

Die Haltemittel in den Endbereichen des Fußstegs können sich quer zur Längsrichtung des Fußstegs erstreckende Schlitze zur Durchführung eines als Band ausgebildeten ersten Befestigungselement und dessen Umlenkung um zwischen den Schlitzen und den diesen benachbarten freien Enden des Fußstegs ausgebildete Haltestege aufweisen.

An den quer zur Längsrichtung des Fußstegs angeordneten Seiten der Schlitze und Haltestege können nach außen vorstehende seitliche Führungsstege für das elastische Band angeordnet sein.

Als erstes Befestigungselement kann alternativ zu dem oben beschriebenen ringförmigen elastischen Stang oder Band ein Klettband dienen. Die beiden Endbereiche des Klettbandes sind von innen durch die quer zur Längsrichtung verlaufenden Schlitze des biegeelastischen Stegs nach außen und dann in der jeweiligen Umfangsrichtung über das um das Bauteil gelegte Klettband gezogen, so dass sich die Klettverschlussbereiche gegenüberliegen. Das Klettband kann somit einfach um das Bauteil gelegt und festgezogen werden. Bei geeigneter Länge des Klettbandes kann die Klettbandhalterung an unterschiedliche Bauteildurchmesser, die in einem bevorzugten Bereich zwischen 50 und 150 mm liegen, leicht angepasst werden. Überschüssige Enden können durch Ablängen entfernt werden.

Das Klettband kann zum elastischen Anliegen am Bauteil gummiert sein. Vorzugsweise ist es an der zum Bauteil gerichteten Seite rutschhemmend beschichtet.

Anstelle des Klettbandes kann auch ein Gurtband, insbesondere in Form eines Gewebebandes, bevorzugt mit einer eingeflochtenen Gummierung, verwendet werden.

Das erfindungsgemäße Befestigungsteil mit dem vorstehend beschriebenen ersten Befestigungselement zur Befestigung des Befestigungsteils an einem Bauteil und/oder mit dem oben beschriebenen zweiten Befestigungselement zur Befestigung des Befestigungsteils an einer Energieführung sind ebenfalls Gegenstand der vorliegenden Erfindung.

Mehrere Ausführungsbeispiele der Erfindung sind in der Zeichnung dargestellt. Es zeigen:
- Figur 1: eine perspektivische Ansicht eines Befestigungsteils mit daran angeordnetem ersten Befestigungselement in Form eines ringförmigen elastischen Bandes,
- Figur 2: eine stirnseitige Ansicht des in Figur 1 dargestellten Befestigungsteils mit erstem Befestigungselement,
- Figur 3: eine Seitenansicht des in Figur 1 dargestellten Befestigungsteils mit erstem Befestigungselement,
- Figur 4: eine ausschnittsweise Darstellung des in Figur 1 gezeigten Befestigungsteils und ersten Befestigungselements und einem eine schlauchförmige Energieführung haltenden zweiten Befestigungselement,
- Figur 5: eine ausschnittsweise Darstellung des in Figur 1 dargestellten Befestigungsteils und ersten Befestigungselements und einer zweiten Ausführung eines eine rohrförmige Energieführungskette haltenden zweiten Befestigungselements in Form eines Protektors,
- Figur 6: eine ausschnittsweise Darstellung des in Figur 1 gezeigten Befestigungsteils und ersten Befestigungselements und einer dritten Ausführung eines zweiten Befestigungselements in Form einer als Schelle ausgebildeten Zwischenanbindung für eine rohrförmige Energieführungskette,
- Figur 7: eine ausschnittsweise Darstellung des in Figur 1 gezeigten Befestigungsteils und ersten Befestigungselements und einer vierten Ausführung eines zweiten Befestigungselements in Form eines als Schelle ausgeführten Anschlusselements für eine rohrförmige Energieführungskette,
- Figur 8: eine perspektivische Darstellung eines alternativen Ausführungsbeispiels für das Befestigungsteil und eines daran angeordneten ersten Befestigungselements,
- Figur 9: eine stirnseitige Ansicht des in Figur 8 gezeigten Befestigungsteils und ersten Befestigungselements,
- Figur 10: eine Seitenansicht des in Figur 8 gezeigten Befestigungsteils und ersten Befestigungselements,
- Figur 11: eine ausschnittsweise Darstellung des in Figur 8 gezeigten Befestigungsteils und ersten Befestigungselements mit einem als Klettband ausgeführten zweiten Befestigungselement für eine schlauchförmige Energieführung,
- Figur 12: eine ausschnittsweise Darstellung des in Figur 8 gezeigten Befestigungsteils und ersten Befestigungselements mit einer zweiten Ausführung des zweiten Befestigungselements in Form eines eine rohrförmige Energieführungskette haltenden Protektors,
- Figur 13: eine ausschnittsweise Darstellung des in Figur 8 gezeigten Befestigungsteils und ersten Befestigungselements mit einer dritten Ausführung des zweiten Befestigungselements in Gestalt einer Schelle zur Zwischenanbindung einer rohrförmigen Energieführungskette und
- Figur 14: eine ausschnittsweise Darstellung des in Figur 8 dargestellten Befestigungsteils und ersten Befestigungselements mit einer vierten Ausführung eines zweiten Befestigungselements als Anschlusselement für eine rohrförmige Energieführungskette.

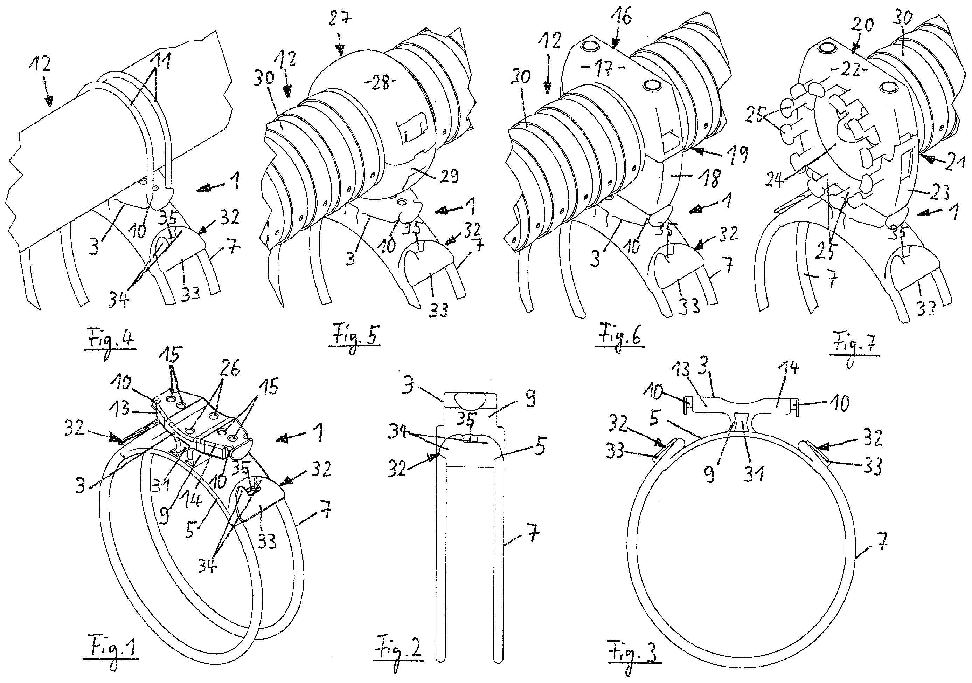

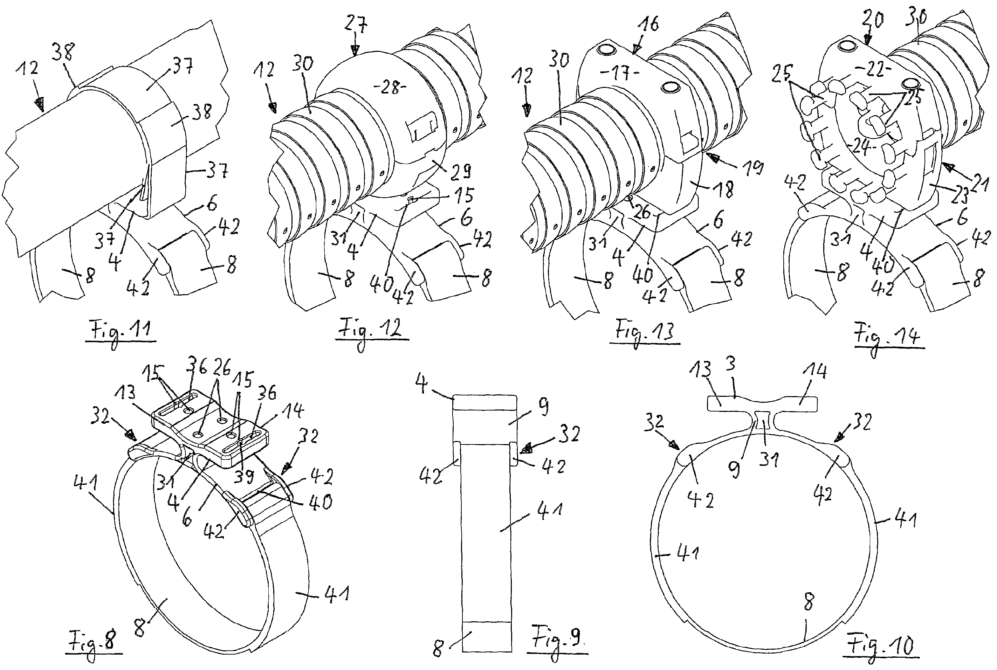

Bei den in den Figuren 1 und 8 dargestellten Ausführungsbeispielen sind die Befestigungsteile 1 bzw. 2 als Doppel-T-förmige und als Kunststoff-Spritzgussteile gefertigte einstückige Teile ausgebildet. Der obere T-Steg bildet den Befestigungssteg 3 bzw. 4 zur Befestigung eines zweiten Befestigungselements unterschiedlicher Ausgestaltung für eine an einem Roboterarm zu haltende Energieführung. Der untere T-Steg bildet den Fußsteg, der in den betrachteten Ausführungsbeispielen als biegeelastischer Steg 5 bzw. 6 ausgebildet ist und zur Befestigung eines ersten Befestigungselements 7 bzw. 8 zur Befestigung des Befestigungsteils 1 bzw. 2 an einem Roboterarm als Bauteil dient. Der jeweilige biegeelastische Steg 5 bzw. 6 ist über ein Verbindungselement 9 einstückig mit dem zugehörigen Befestigungssteg 3 bzw. 4 verbunden.

Bei dem in Figur 1 dargestellten Ausführungsbeispiel weisen die Bereiche der freien Enden des Befestigungsstegs zwei Einschnürungen 10 zur Umbindung mit einem um die Energieführung gelegten ringförmigen elastischen Strangs 11 als zweites Befestigungselement auf, der um eine Energieführung 12 gespannt werden kann. Der Strang 11 ist im betrachteten Ausführungsbeispiel als Gummiring ausgebildet.

Wie ebenfalls aus dem in Figur 1 gezeigten Ausführungsbeispiel hervorgeht, weist der Befestigungssteg 3sich über das Verbindungselement 9 hinaus in seiner Längsrichtung erstreckende Seitenbereiche 13, 14 auf, die in einem Abstand zum biegeelastischen Steg 5 angeordnet sind und jeweils zwei in Längsrichtung beabstandete Öffnungen 15 zur Befestigung anderer Ausführungen des zweiten Befestigungselements für die Energieführung aufweist. Die Öffnungen 15 können zur Befestigung einer die Energieführung haltenden Schelle 16 als zweites Befestigungselement, wie in Figur 6 gezeigt, dienen, wobei die Schelle 16 eine im Wesentlichen ebene, sich in Längsrichtung des Befestigungsstegs 3 erstreckende Befestigungsfläche aufweist. Die Schelle 16 besteht aus zwei aus Kunststoff gefertigten Hälften 17 und 18, die übereinander angeordnet sind. Die beiden Hälften 17 und 18 sind in einem der seitlichen Verbindungsbereiche verschwenkbar miteinander verbunden, so dass sie zum Einlegen der Energieführung aufgeschwenkt und zur Halterung der Energieführung geschlossen werden können. Als Verschluss auf der der Schwenkverbindung 19 gegenüberliegenden Seite dient ein Schnappverschluss.

Zur Montage der Schelle 16 auf dem Befestigungssteg 3 werden an die Positionen der Öffnungen 15 angepasste Bohrungen in die Bodenwand der unteren Hälfte 18 der Schelle, bei aufgeschwenkter Position der oberen Hälfte 17 und vor dem Einlegen der Energieführung, eingebracht. Durch die Bohrungen hindurch werden selbstschneidende Schrauben hindurchgeführt und in eine oder mehrere Öffnungen 15 in jedem Seitenbereich 13, 14 des Befestigungsstegs 3 eingebracht.

Ebenso kann mit einer als Anschlusselement dienenden Schelle 20 als zweites Befestigungselement zum Einspannen eines Endbereichs einer Energieführung verfahren werden, wie in Figur 7 gezeigt ist. In Figur 7 ist die als Anschlusselement dienende Schelle 20 so orientiert, dass der der Schwenkverbindung 19 gegenüberliegende Rastverschluss 21 zwischen der oberen Hälfte 22 und der unteren Hälfte 23 zu erkennen ist.

Die Schelle 20 ist an der von der Energieführungskette wegweisenden Seite um ihre zentrale Öffnung 24 herum mit Zugentlastungselementen 25 zum Anbinden der durch die Energieführung geführten Leitungen versehen.

Wie weiterhin aus Figur 1 hervorgeht, sind im mittleren Bereich des Befestigungsstegs 3 zwei Öffnungen 26 ausgebildet, die in Querrichtung bezüglich der Längsrichtung des Befestigungsstegs 3 beabstandet zueinander angeordnet sind. Die beiden Öffnungen 26 dienen zur Befestigung des in Figur 5 gezeigten Verschleißringes (Protektors) 27 als zweites Befestigungselement für die Energieführung. Der Verschleißring 27 besteht, wie die in den Figuren 6 und 7 gezeigten Schellen 16 bzw. 20, aus zwei übereinander auf dem Befestigungssteg 3 angeordneten Ringhälften 28 und 29. Die beiden Ringhälften 28 und 29 werden in ihren beiden gegenüberliegenden Verbindungsbereichen durch jeweils einen Schnappverschluss aneinander befestigt. Die Außenkontur des Verschleißrings 27 ist in Längsrichtung ebenfalls konvex gekrümmt, so dass bei nahezu keinen Störkanten ein sehr geringes Verletzungsrisiko besteht.

Die in den Figuren 5-7 gezeigten Energieführungen sind als rohrförmige Energieführungskette 30 ausgebildet.

Das Verbindungselement 9 weist an seinen quer zur Längsrichtung des Befestigungsstegs 3 weisenden Seiten Aussparungen 31 mit einem dazwischenliegenden Steg als Materialaussparungen auf. In den über den Aussparungen 31 liegenden Bereichen des Befestigungsstegs 3 sind die beiden Öffnungen 26 angeordnet.

Wie aus Figur 1 hervorgeht, weist der biegeelastische Steg 5 in seinen Endbereichen Haltemittel 32 für das als ringförmiger elastischer Strang 7 ausgebildete erste Befestigungselement auf. Die Haltemittel 32 sind als nach außen und zum Verbindungselement 9 hin gewinkelte hakenförmige Vorsprünge 33 ausgebildet. Die Vorsprünge 33 weisen in einer parallel zum biegeelastischen Steg 5 verlaufenden Ebene eine sich in einem Bogen erstreckende Anlagefläche für den um sie herumführbaren ringförmigen elastischen Strang auf, über die sich die gewinkelten Enden 34 der hakenförmigen Vorsprünge 33 erstrecken. Die hakenförmigen Vorsprünge 33 sind einstückig an das Befestigungsteil 1 angeformt.

Die Außenkontur der gewinkelten Enden 34 der hakenförmigen Vorsprünge 33 verläuft bogenförmig mit einem fluchtend zur Anlagefläche für den ringförmigen elastischen Strang verlaufenden Einschnitt 35, in den ein Werkzeug von außen zwecks Lösens des um die Anlagefläche herumgeführten unter Spannung stehenden elastischen Strangs aus der Verankerung eingreifen kann.

Bei dem in Figur 8 dargestellten Ausführungsbeispiel weist der Befestigungssteg 4 im Bereich seiner freien Enden quer zur seiner Längsrichtung verlaufende Schlitze 36 zum Durchführen eines Klettbandes 37 als Halterung für eine schlauch- oder rohrförmige Energieführung 12. Die beiden Endbereiche 38 des Klettbandes 37 sind von außen durch die quer zur Längsrichtung verlaufenden Schlitze 36 des Befestigungsstegs nach innen auf das biegeelastische Element 6 hingeführt, dann über die Enden des Befestigungsstegs 4 umgelenkt und in der jeweiligen Umfangsrichtung über das um die Energieführung 12 gezogene Klettband von außen aufgelegt und an diesem mit den Klettverschlussbereichen 39 befestigt, wie in Figur 11 gezeigt.

Die Schlitze 36 sind in ihrer Mitte mit in Längsrichtung des Befestigungsteils 4 weisenden Erweiterungen 39 versehen, die, zusammen mit in Längsrichtung des Befestigungsstegs 4 beabstandeten Öffnungen 15, zur Befestigung der in den Figuren 13 und 14 gezeigten Schellen 16 bzw. 20 als Halterungen für eine rohrförmige Energieführungskette 30 dienen.

Die Montage der Schellen 16 und 20 am Befestigungssteg 4 geschieht durch das oben anhand der Figuren 6 und 7 beschriebene Verfahren.

Wie ebenfalls aus Figur 8 hervorgeht, weist der Befestigungssteg 4 in seinem mittleren Bereich, wie bei dem in Figur 1 gezeigten Ausführungsbeispiel, zwei in Querrichtung beabstandete Öffnungen 26 auf, die zur Befestigung eines in Figur 12 gezeigten Verschleißringes (Protektors) 27 dienen. Die Montage des Verschleißringes 27 mit der Energieführungskette 30 geschieht wie oben in Bezug auf Figur 5 des ersten Ausführungsbeispiels des Befestigungsstegs 3 beschrieben.

Zur Befestigung des in den Figuren 8-10 gezeigten als Klettband ausgebildeten ersten Befestigungselements 8 am biegeelastischen Steg 6 weist dieser im Bereich seiner freien Enden quer zur Längsrichtung des biegeelastischen Stegs 4 verlaufende Schlitze 40 auf, durch die sich das Klettband erstreckt. Die beiden Endbereiche 41 des um den (in der Zeichnung nicht dargestellten) Roboterarm gelegten Klettbandes sind von innen durch die Schlitze 40 nach außen geführt, in der jeweiligen Umfangsrichtung um zwischen den Schlitzen 40 und den diesen benachbarten freien Enden des biegeelastischen Stegs 6 ausgebildete Haltestege umgelenkt, über das um den Roboterarm gelegte Klettband gezogen und durch Klettverschlussbereiche an diesem befestigt.

An den quer zur Längsrichtung des biegeelastischen Stegs 6 angeordneten Seiten der Schlitze 40 und Haltestege sind nach außen vorstehende seitliche Führungsstege 42 für das Klettband angeordnet. Die Führungsstege sind einstückig an den biegeelastischen Steg 6 angeformt.

### Bezugszeichenliste

- 1: Befestigungsteil
- 2: Befestigungsteil
- 3: Befestigungssteg
- 4: Befestigungssteg
- 5: biegeelastischer Steg
- 6: beigeelastischer Steg
- 7: erstes Befestigungselement
- 8: erstes Befestigungselement
- 9: Verbindungselement
- 10: Einschnürung
- 11: ringförmiger elastischer Strang
- 12: Energieführung
- 13: Seitenbereich
- 14: Seitenbereich
- 15: Öffnung
- 16: Schelle
- 17: obere Hälfte
- 18: untere Hälfte
- 19: Schwenkverbindung
- 20: Schelle
- 21: Rastverschluss
- 22: obere Hälfte
- 23: untere Hälfte
- 24: zentrale Öffnung
- 25: Zugentlastungselement
- 26: Öffnung
- 27: Verschleißring
- 28: Ringhälfte
- 29: Ringhälfte
- 30: Energieführungskette
- 31: Aussparung
- 32: Haltemittel
- 33: hakenförmiger Vorsprung
- 34: gewinkeltes Ende
- 35: Einschnitt
- 36: Schlitz
- 37: Klettband
- 38: Endbereich
- 39: Erweiterung
- 40: Schlitz
- 41: Endbereich
- 42: Führungssteg

## Patentansprüche

1. Befestigungsteil (1; 2) zur Befestigung einer Energieführung (12) an einem Bauteil, das einen Fußsteg aufweist, der, sich in einer Längsrichtung erstreckend, in einer vorgekrümmten, geraden oder winkligen Ausführung gestaltet und auf einem Bauteil sich in dessen Umfangsrichtung erstreckend anordenbar ist und der in seinen Endbereichen Haltemittel (32) für ein strang- oder bandförmiges erstes Befestigungselement (7; 8) zur Befestigung des Befestigungsteils (1; 2) am Bauteil aufweist, und das Befestigungsteil (1; 2) einen sich in Längsrichtung des Fußstegs erstreckenden Befestigungssteg (3; 4) aufweist, der mehrere Befestigungsmittel zur Befestigung eines zweiten Befestigungselements unterschiedlicher Ausgestaltung zur Befestigung einer Energieführung (12) am Befestigungsteil (1; 2) aufweist, wobei der Fußsteg und der Befestigungssteg (3; 4) in ihrem mittleren Bereich über ein Verbindungselement (9) miteinander verbunden sind, so dass sich über das Verbindungselement (9) hinaus in Längsrichtung des Fußstegs erstreckende Seitenbereiche (13, 14) des Befestigungsstegs (3; 4) in einem Abstand zum Fußsteg angeordnet sind, wobei der mittlere Bereich des Befestigungsstegs (3; 4), an den das Verbindungselement (9) angeformt ist, zweite Befestigungsmittel der mehreren Befestigungsmittel aufweist, die in Querrichtung bezüglich der Längsrichtung des Befestigungsstegs (3; 4) beabstandet angeordnete Öffnungen (26) aufweisen, der Befestigungssteg (3; 4) sich in einer zur Längsrichtung des Fußstegs parallelen Längsrichtung erstreckt, das Befestigungsteil (1; 2) als Doppel-T-förmiges und als Kunststoff-Spritzgussteil gefertigtes einstückiges Teil ausgebildet ist, wobei ein T-Steg den Befestigungssteg (3; 4) und der andere T-Steg den Fußsteg bildet, und der Fußsteg als biegeelastischer Steg ausgebildet ist, **dadurch gekennzeichnet, dass** die Seitenbereiche (13, 14) jeweils erste Befestigungsmittel der mehreren Befestigungsmittel aufweisen, die in Längsrichtung des Befestigungsstegs (3; 4) voneinander beabstandet angeordnete Öffnungen (15) zum Eingriff insbesondere selbstschneidender Schrauben aufweisen, so dass sie die Befestigung zweiter Befestigungselemente mit unterschiedlichen Erstreckungen längs der Seitenbereiche (13, 14) des Befestigungsstegs (3; 4) ermöglichen, dass die als Öffnungen (26) ausgebildeten zweiten Befestigungsmittel zum Eingriff insbesondere selbstschneidender Schrauben ausgelegt sind, und das Verbindungselement (9) an seinen quer zur Längsrichtung des Fußstegs angeordneten Seiten Aussparungen (31) aufweist, in deren darüberliegenden Bereichen die Öffnungen (26) der zweiten Befestigungsmittel angeordnet sind, und dass die Bereiche der freien Enden der Seitenbereiche (13, 14) des Befestigungsstegs (3; 4) Einschnürungen (10) zur Verankerung eines um die Energieführung (12) legbaren ringförmigen elastischen Strangs (11) oder Bandes aufweisen und/oder in den Endbereichen des Befestigungsstegs (4) bezüglich dessen Längsrichtung sich quer zu seiner Längsrichtung erstreckende Schlitze (36) zur Durchführung eines um eine Energieführung (12) gelegten als zweites Befestigungselement ausgebildeten Bandes und zu dessen Umlenkung um zwischen den Schlitzen (36) und den diesen benachbarten freien Enden des Befestigungsstegs (4) ausgebildete Haltestege vorgesehen sind.

2. Befestigungsteil (1) nach Anspruch **1, dadurch gekennzeichnet, dass** die Haltemittel (32) in den Endbereichen des Fußstegs nach außen und zum Verbindungselement (9) hin gewinkelte hakenförmige Vorsprünge (33) zur Verankerung eines um das Bauteil gelegten elastischen ringförmigen Strangs oder Bandes als erstes Befestigungsmittel (7) aufweisen.

3. Befestigungsteil (1) nach Anspruch 2, **dadurch gekennzeichnet, dass** die hakenförmigen Vorsprünge (33) in einer parallel zum Fußsteg verlaufenden Ebene eine sich in einem Bogen erstreckende Anlagefläche für den um sie herumführbaren elastischen ringförmigen Strang oder das Band aufweisen, über die sich die gewinkelten Enden (34) der hakenförmigen Vorsprünge (33) erstrecken.

4. Befestigungsteil (2) nach einem der Ansprüche 1 bis 3, **dadurch gekennzeichnet, dass** die Haltemittel in den Endbereichen des Fußstegs sich quer zur Längsrichtung des Fußstegs erstreckende Schlitze (40) zur Durchführung eines als Band ausgebildeten ersten Befestigungselements (8) und dessen Umlenkung um zwischen den Schlitzen (40) und den diesen benachbarten freien Enden des Fußstegs ausgebildete Haltestege aufweisen.

5. Befestigungsteil (2) nach Anspruch 4, **dadurch gekennzeichnet, dass** an den quer zur Längsrichtung des Fußstegs angeordneten Seiten der Schlitze (40) und Haltestege nach außen vorstehende seitliche Führungsstege (42) für das elastische Band angeordnet sind.

6. Befestigungsteil nach einem der Ansprüche 1 bis **5,** wobei in den Endbereichen des Befestigungsstegs (4) bezüglich dessen Längsrichtung sich quer zu seiner Längsrichtung erstreckende Schlitze (36) vorgesehen sind, **dadurch gekennzeichnet, dass** die Schlitze (36) mit in Längsrichtung des Befestigungsteils (4) gegenüberliegenden Erweiterungen (39) versehen sind, die zu den ersten Befestigungsmitteln gehörende Öffnungen (15) bilden.

7. Befestigungsteil nach einem der Ansprüche 1 bis 6 mit einem zweiten Befestigungselement, wobei das zweite Befestigungselement als eines der drei folgenden Bauteile ausgebildet ist:
- als Verschleißring (27), der aus zwei Ringhälften (28, 29) und einem Verbindungsmittel zum Verbinden der beiden Ringhälften (28, 29) zu einem Ring unter Verwendung von Schnapp- oder Rastverschlüssen besteht, wobei die beiden Ringhälften (28, 29) übereinander auf dem Befestigungssteg (3, 4) angeordnet sind und in die untere Ringhälfte (29) an die Position der Öffnungen (26) der zweiten Befestigungsmittel angepasste Bohrungen zum Eingriff insbesondere selbstschneidender Schrauben zur Montage am Befestigungssteg (3, 4) eingebracht sind,
- als Schelle (16; 20) mit einer im Wesentlichen ebenen, sich weiter als die Befestigungsfläche des Verschleißrings (27) in Längsrichtung des Befestigungsstegs (3; 4) erstreckenden Befestigungsfläche, wobei die Schelle (16; 20) aus übereinander angeordneten, insbesondere aus Kunststoff gefertigten Hälften (22, 23) besteht, die in einem seitlichen Verbindungsbereich verschwenkbar miteinander verbindbar oder verbunden und an der der Schwenkverbindung gegenüberliegenden Seite insbesondere durch einen Schnapp-, Spann- oder Rastverschluss verschließbar sind, und in die Bodenwand der unteren Hälfte (18) der Schelle an die Position der Öffnungen (15) der ersten Befestigungsmittel angepasste Bohrungen zum Einbringen insbesondere selbstschneidender Schrauben in eine oder mehrere Öffnungen (15) der ersten Befestigungsmittel in den Seitenbereichen (13, 14) des Befestigungsstegs (3; 4) eingebracht sind,
- als ringförmiger elastischer Strang (11) oder ringförmiges elastisches Band, das um eine Energieführung (12) legbar ist und in den Einschnürungen (10) der Seitenbereiche (13, 14) des Befestigungsstegs (3; 4) verankert ist, oder als um eine Energieführung (12) legbares Band, das durch die in den Endbereichen des Befestigungsstegs (4) bezüglich dessen Längsrichtung sich quer zu seiner Längsrichtung erstreckenden Schlitze (36) geführt und zwischen den Schlitzen (36) und den diesen benachbarten freien Enden des Befestigungsstegs (4) ausgebildete Haltestege umgelenkt ist.

8. Befestigungsteil mit einem durch Schlitze (36) in den Endbereichen des Befestigungsstegs (4) geführten und zwischen den Schlitzen (36) und den diesen benachbarten freien Enden des Befestigungsstegs (4) ausgebildeten Haltestegen umgelenkten Band als zweites Befestigungselement nach Anspruch 7, **dadurch gekennzeichnet, dass** das Band als Klettband (37) ausgelegt ist.

## Claims

1. A fastening part (1; 2) for fastening an energy guide (12) to a component, the fastening part comprising a foot web, which, extending in a longitudinal direction, is designed in a pre-curved, straight or angular configuration and can be arranged on a component so as to extend in the peripheral direction thereof, and which in its end regions has holding means (32) for a first fastening element (7; 8) in strand or band form for fastening the fastening part (1; 2) to the component, and the fastening part (1; 2) has a fastening web (3; 4) which extends in the longitudinal direction of the foot web and has a plurality of fastening means for fastening a second fastening element of different configuration for fastening an energy guide (12) to the fastening part (1; 2), wherein the foot web and the fastening web (3; 4) are connected together in their central region by way of a connecting element (9) so that side regions (13, 14) of the fastening web (3; 4), that extend beyond the connecting element (9) in the longitudinal direction of the foot web, are arranged at a spacing relative to the foot web, wherein the central region of the fastening web (3; 4) to which the connecting element (9) is molded, comprises second fastening means of the plurality of fastening means which have openings (26) spaced apart in the transverse direction relative to the longitudinal direction of the fastening web (3; 4), wherein the fastening web (3; 4) extends in a longitudinal direction parallel to the longitudinal direction of the foot web, wherein the fastening part (1; 2) is configured as a double-T-shaped integral part produced in the form of a plastic injection-molded part, wherein one T-limb forms the fastening web (3; 4) and the other T-limb forms the foot web, and wherein the foot web is configured as a flexurally elastic web, **characterised in that** the side regions (13, 14) each comprise fastening means of the plurality of fastening means which have openings (15) spaced apart in the longitudinal direction of the fastening web (3; 4) for the engagement of self-tapping screws in particular to enable fastening of second fastening elements of different lengths along the side regions (13, 14) of the fastening web (3; 4), that the second fastening means in the form of openings (26) are configured for the engagement of self-tapping screws in particular, and the connecting element (9) has recesses (31) on its sides arranged transversely to the longitudinal direction of the foot web, in the overlying regions of said recesses the openings (26) of the second fastening means are arranged, and that the regions of the free ends of side regions (13, 14) of the fastening web (3; 4) have constrictions (10) for anchoring an annular elastic strand (11) or band to be laid around the energy guide (12) and/or provided in the end regions of the fastening web (4) are slots (36) extending transversely to its longitudinal direction for passing through a band placed around an energy guide (12) as the second fastening element and for the deflection thereof about holding webs provided between the slots (36) and the free ends of the fastening web (4), that are adjacent thereto.

2. A fastening part (1) according to claim 1, **characterised in that** the holding means (32) have hook-shaped projections (33) angled outwardly in the end regions of the foot web and towards the connecting element (9) for anchoring an elastic annular strand or band placed around the component as the first fastening means (7).

3. A fastening part (1) according to claim 2, **characterised in that** the hook-shaped projections (33) in a plane extending parallel to the foot web have a contact surface extending in an arc for the elastic annular strand or the band that can be passed around same and over which the angled ends (34) of the hook-shaped projections (33) extend.

4. A fastening part (2) according to any one of claims 1 through 3, **characterised in that** the holding means have slots (40) extending in the end regions of the foot web transversely to the longitudinal direction of the foot web for passing through a first fastening element (8) in the form of a band and for the deflection thereof around holding webs provided between the slots (40) and the free ends of the foot web, that are adjacent thereto.

5. A fastening part (2) according to claim 4, **characterised in that** arranged at the sides of the slots (40) and holding webs, that are arranged transversely to the longitudinal direction of the foot web, are outwardly projecting lateral guide webs (42) for the elastic band.

6. A fastening part according to any one of claims 1 through 5, wherein provided in the end regions of the fastening web (4) are slots (36) extending transversely to its longitudinal direction, **characterised in that** the slots (36) are provided with enlargements (39) which are in opposite relationship in the longitudinal direction of the fastening part (4) and which form openings (15) belonging to the first fastening means.

7. A fastening part according to any one of claims 1 through 6, comprising a second fastening element, wherein the second fastening element is configured as one of the following three components:
- as a wear ring (27) which consists of two ring halves (28, 29) and a connecting means for connecting the two ring halves (28, 29) to form a ring using snap-action or latching closures, wherein the two ring halves (28, 29) are arranged in mutually superposed relationship on the fastening web (3, 4) and bores adapted to the position of the openings (26) of the second fastening means are made in the lower ring half (29) for engagement of self-tapping screws in particular, for mounting to the fastening web (3, 4),
- as a clamp (16; 20) with a substantially flat fastening surface extending in the longitudinal direction of the fastening web (3; 4) further than the fastening surface of the wear ring (27), wherein the clamp (16; 20) comprises two halves (22, 23) preferably made from plastic, which are arranged in mutually superposed relationship and which can be or are connected together pivotably in a lateral connecting region and can be closed on the side opposite the pivotable connection, specifically by a snap-action, clamping or latching closure, and bores adapted to the position of the opening (15) of the first fastening means are formed in the bottom wall of the lower half (18) of the clamp, for introducing preferably self-tapping screws into one or more openings (15) in the side regions (13, 14) of the fastening web (3; 4),
- as an annular elastic strand (11) or as an annular elastic band to be laid around the energy guide (12) and anchored in the constrictions (10) of the side regions (13, 14) of the fastening web (3; 4), or as a band to be laid around the energy guide (12) which is guided by the slots (36) extending in the end regions of the fastening web (4) transversely to the longitudinal direction of the foot web and is deflected around holding webs provided between the slots (36) and the free ends of the fastening web (4), that are adjacent thereto.

8. A fastening part comprising a band, which is guided by slots (36) in the end regions of the fastening web (4) and deflected around holding webs provided between the slots (36) and the free ends of the fastening web (4), that are adjacent thereto, as a second fastening element according to claim 7, **characterised in that** the band is in the form of a hook-and-loop fastener (37).

## Revendications

1. Pièce de fixation (1; 2) destinée à fixer un guide d'énergie (12) à un composant, la pièce de fixation comprenant une âme de pied qui, s'étendant dans une direction longitudinale, est conçue selon une configuration pré-courbée, droite ou angulaire et peut être disposée sur un composant de manière à s'étendre dans la direction périphérique de celui-ci et qui, dans ses zones d'extrémité, comporte des moyens de retenue (32) pour un premier élément de fixation (7; 8) sous forme de toron ou de bande destiné à fixer la pièce de fixation (1; 2) au composant, et la pièce de fixation (1; 2) comporte une âme de fixation (3; 4) qui s'étend dans la direction longitudinale de l'âme de pied et qui comporte une pluralité de moyens de fixation destinés à fixer un deuxième élément de fixation de configuration différente pour fixer un guide d'énergie (12) à la pièce de fixation (1; 2), dans laquelle l'âme de pied et l'âme de fixation (3; 4) sont reliées entre elles dans leur zone centrale au moyen d'un élément de liaison (9), de sorte que des zones latérales (13, 14) de l'âme de fixation (3; 4), qui s'étendent au-delà de l'élément de liaison (9) dans la direction longitudinale de l'âme de pied, sont disposées à distance de l'âme de pied, la zone centrale de l'âme de fixation (3; 4), sur laquelle l'élément de liaison (9) est moulé, comprend des seconds moyens de fixation parmi la pluralité de moyens de fixation qui présentent des ouvertures (26) espacées dans la direction transversale par rapport à la direction longitudinale de l´âme de fixation (3; 4), l'âme de fixation (3; 4) s'étendant dans une direction longitudinale parallèle à la direction longitudinale de l'âme de pied, la pièce de fixation (1; 2) est configurée comme une pièce monobloc en forme de double T, réalisée sous la forme d'une pièce moulée par injection de matière plastique, dans laquelle une branche du T forme l'âme de fixation (3; 4) et l'autre branche du T forme l'âme de pied, et l'âme de pied est configurée comme une âme élastique en flexion, **caractérisée en ce que** les zones latérales (13, 14) comprennent chacune des moyens de fixation parmi la pluralité de moyens de fixation qui présentent des ouvertures (15) espacées les unes des autres dans la direction longitudinale de l'âme de fixation (3; 4) pour l'engagement notamment de vis autotaraudeuses, afin de permettre la fixation de seconds éléments de fixation de longueurs différentes le long des zones latérales (13, 14) de l'âme de fixation (3; 4), **en ce que** les seconds moyens de fixation sous forme d'ouvertures (26) sont conçus notamment pour l'engagement de vis autotaraudeuses, et que l'élément de liaison (9) présente, sur ses côtés disposés transversalement à la direction longitudinale de l'âme de pied, des évidements (31), les ouvertures (26) des seconds moyens de fixation étant agencées dans les zones sus-jacentes à ces évidements, et que les zones des extrémités libres des zones latérales (13, 14) de l'âme de fixation (3; 4) comportent des rétrécissements (10) destinés à l'ancrage d'un brin élastique annulaire (11) ou d'une bande à placer autour du guide d'énergie (12) et/ou que, dans les zones d'extrémité de l'âme de fixation (4), sont prévues des fentes (36) s'étendant transversalement à sa direction longitudinale pour le passage d'une bande placée autour d'un guide d'énergie (12) en tant que deuxième élément de fixation et pour le dévier autour des âmes de maintien prévues entre les fentes (36) et les extrémités libres de l´âme de fixation (4), qui leur sont adjacentes.

2. Pièce de fixation (1) selon la revendication 1, **caractérisée en ce que** les moyens de retenue (32) comportent des saillies en forme de crochet (33) coudées vers l'extérieur et vers l'élément de liaison (9) dans les zones d'extrémité de l'âme de pied, pour ancrer un brin ou une bande annulaire élastique placé(e) autour du composant en tant que premier élément de fixation (7).

3. Pièce de fixation (1) selon la revendication 2, **caractérisée en ce que** les saillies en forme de crochet (33), dans un plan s'étendant parallèlement à l'âme de pied, présentent une surface de contact s'étendant en arc pour le brin annulaire élastique ou la bande qui peut être placé(e) autour de celles-ci et au-dessus de laquelle s'étendent les extrémités inclinées (34) des saillies en forme de crochet (33).

4. Pièce de fixation (2) selon l'une quelconque des revendications 1 à 3, **caractérisée en ce que** les moyens de retenue comportent des fentes (40) s'étendant dans les zones d'extrémité de l'âme de pied, transversalement à la direction longitudinale de celle-ci, pour le passage d'un premier élément de fixation (8) sous la forme d'une bande et pour la redirection de celle-ci autour des âmes de retenue prévues entre les fentes (40) et les extrémités libres de l'âme de pied, qui sont adjacentes à celles-ci.

5. Pièce de fixation (2) selon la revendication 4, **caractérisée en ce que**, disposées sur les côtés des fentes (40) et des âmes de retenue, qui sont disposées transversalement à la direction longitudinale de l'âme de pied, se trouvent des âmes de guidage latérales (42) faisant saillie vers l'extérieur pour la bande élastique.

6. Pièce de fixation selon l'une quelconque des revendications 1 à 5, dans lequel sont prévues, dans les zones d'extrémité de l'âme de fixation (4), des fentes (36) s'étendant transversalement à sa direction longitudinale, **caractérisée en ce que** les fentes (36) sont pourvues d'élargissements (39) qui sont disposés de manière opposée dans la direction longitudinale de l´âme de fixation (4) et qui forment des ouvertures (15) appartenant aux premiers moyens de fixation.

7. Pièce de fixation selon l'une quelconque des revendications 1 à 6, comprenant un deuxième élément de fixation, dans laquelle le deuxième élément de fixation est configuré comme l'un des trois composants suivants:
- une bague d'usure (27) composée de deux demi-bagues (28, 29) et d'un moyen de liaison permettant de relier les deux demi-bagues (28, 29) pour former une bague à l'aide de fermetures à encliquetage ou à loquet, les deux demi-bagues (28, 29) étant disposées en superposition l'une sur l'autre sur l'âme de fixation (3, 4) et dans laquelle des alésages adaptés à la position des ouvertures (26) du deuxième moyen de fixation sont formés dans la moitié d'anneau inférieure (29) pour l'engagement notamment de vis autotaraudeuses, en vue du montage sur l'âme de fixation (3, 4),
- sous la forme d'une pince (16; 20) présentant une surface de fixation sensiblement plate s'étendant dans la direction longitudinale de l'âme de fixation (3; 4) au-delà de la surface de fixation de la bague d'usure (27), la pince (16; 20) comprenant deux moitiés (22, 23) de préférence en plastique, qui sont disposées l'une au-dessus de l'autre et qui peuvent être ou sont reliées entre elles de manière pivotante dans une zone de liaison latérale et peuvent être fermées du côté opposé à la liaison pivotante, notamment par un mécanisme à encliquetage, une fermeture par serrage ou par encliquetage, et des alésages adaptés à la position de l'ouverture (15) du premiers moyens de fixation sont formés dans la paroi inférieure de la moitié inférieure (18) de la pince, pour l'insertion de vis de préférence autotaraudeuses dans une ou plusieurs ouvertures (15) des premiers moyens de fixation situées dans les zones latérales (13, 14) de l'âme de fixation (3; 4),
- sous la forme d'un brin élastique annulaire (11) ou d'une bande élastique annulaire destiné(e) à être placée autour du guide d'énergie (12) et ancrée dans les rétrécissements (10) des zones latérales (13, 14) de l'âme de fixation (3; 4), ou sous la forme d'une bande destinée à être placée autour du guide d'énergie (12), laquelle est guidée par les fentes (36) s'étendant dans les zones d'extrémité de l'âme de fixation (4) transversalement à la direction longitudinale de l'âme de pied et est redirigée autour des âmes de retenue prévues entre les fentes (36) et les extrémités libres de l'âme de fixation (4) qui leur sont adjacentes.

8. Pièce de fixation comprenant une bande, qui est guidée par des fentes (36) dans les zones d'extrémité de l'âme de fixation (4) et redirigée autour des âmes de retenue prévues entre les fentes (36) et les extrémités libres de l'âme de fixation (4), qui leur sont adjacentes, en tant que deuxième élément de fixation selon la revendication 7, **caractérisée en ce que** la bande se présente sous la forme d'une fermeture auto-agrippante (37).
